# EUROPEAN PATENT APPLICATION

(11) **EP 4 535 075 A1**
(43) Date of publication of application: **09.04.2025**
(21) Application number: 23816221.8
(22) Date of filing: 20.04.2023
(51) Int. Cl.: G02F 1/1339, G02F 1/1337, G02F 1/139, G02F 1/1335, G02B 5/30, E06B 9/24, E06B 3/67, B60J 3/04, G06F 1/16

(54) **TRANSMITTANCE-VARIABLE OPTICAL LAMINATE AND MANUFACTURING METHOD THEREFOR, AND SMART WINDOW COMPRISING SAME**

(30) Priority: 31.05.2022 KR 20220066473
(71) Applicant: Dongwoo Fine-Chem Co., Ltd., Iksan-si, Jeollabuk-do 54631 (KR)
(72) Inventor: KIM, Hyung-Hun, Iksan-si, Jeollabuk-do 54631 (KR); KIM, Dong-Hwi, Iksan-si, Jeollabuk-do 54631 (KR); SONG, Seung-Won, Iksan-si, Jeollabuk-do 54631 (KR)
(74) Representative: Betten & Resch
(86) International application number: PCT/KR2023/005386
(87) International publication number: WO 2023/234556

(57) **Abstract**

The present invention relates to a transmittance-variable optical laminate and a manufacture method therefor, and a smart window comprising same, the laminate including: a first laminate in which a first polarization plate, a first transparent conductive layer, and a first alignment film are sequentially laminated; a second laminate in which a second polarization plate, a second transparent conductive layer, and a second alignment are sequentially laminated; and a dispersion liquid crystal disposed between the first laminate and the second laminate, wherein the dispersion liquid crystal includes a spacer, a compressive modulus of the spacer to a compressive modulus of one of the first laminate and the second laminate is 0.75 to 1.55, and the spacer is included in an amount of 0.5 to 3.0% by weight based on the total weight of the dispersion liquid crystal.

## Description

### Technical Field

The present disclosure relates to a variable transmittance optical stack, a method for manufacturing the same, and a smart window including the same.

### Background Art

In general, there are many cases in which an external light-blocking coating is applied to a window of a means of transportation such as a vehicle. However, the transmittance of a conventional window of a means of transportation is fixed, and the transmittance of the external light-blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

The variable transmittance optical stack is driven by changing the transmittance by driving liquid crystal according to voltage application. The variable transmittance optical stack developed so far is manufactured by forming a conductive layer for driving liquid crystal on a separate substrate, and then combining the conductive layer with other elements such as a polarizing plate.

Korean Patent No. 10-2226630 discloses a light control film, a laminated glass, and a manufacturing method of a light control film, and the light control film is configured such that first and second stacks each including an alignment film support a liquid crystal layer in an insertion manner and electrodes installed in the first and second stacks are driven to control alignment of liquid crystal molecules relative to the liquid crystal layer to control transmitted light, wherein a spacer is installed to maintain the thickness of the liquid crystal layer, the Vickers hardness Xs of the spacer ranges from 16.9 to 40.2, and the Vickers hardness Xf of the second stack ranges from 11.8 to 35.9.

However, with only the individual hardness ranges of the stack and the spacer, a defect may occur even within the same numerical range due to the correlation between the hardness of the stack and the spacer, and the durability and quality of the device may be deteriorated, which is problematic.

Therefore, there is a need to develop a variable transmittance optical stack to suppress interference between each substrate by revealing the correlation of the compressive modulus between the stack and the spacer, prevent occurrence of cracks or scratches, and have excellent durability that can maintain a liquid crystal gap evenly.

### Disclosure

### Technical Problem

In order to solve the above-mentioned problems, an objective of the present disclosure is to ensure that a dispersion liquid crystal disposed between a first stack and a second stack includes a spacer, and a compressive modulus of the spacer to a compressive modulus of one of the first and second stacks is 0.75 to 1.55, and the content of the spacer to the total weight of the dispersion liquid crystal ranges from 0.5 to 3.0 % by weight.

Another objective of the present disclosure is to prevent cracks from occurring in an optical stack.

Still another objective of the present disclosure is to secure a liquid crystal space between stacks to achieve smooth light transmission.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack including: a first stack comprising a first polarizing plate, a first transparent conductive layer, and a first alignment film stacked in order; a second stack comprising a second polarizing plate, a second transparent conductive layer, and a second alignment film stacked in order; and a dispersion liquid crystal disposed between the first stack and the second stack, wherein the dispersion liquid crystal may include a spacer, a compressive modulus of the spacer to a compressive modulus of at least one of a group consisting of the first stack and the second stack may be 0.75 to 1.55, and 0.5 to 3.0 % by weight of the spacer may be included as the total weight of the dispersion liquid crystal.

According to a first aspect of the present disclosure, a compressive modulus of one selected from a group consisting of the first stack and the second stack may range from 3,000 to 4,000Mpa.

According to a second aspect of the present disclosure, a compressive modulus of the spacer may range from 2,000 to 5,500Mpa.

According to a third aspect of the present disclosure, the spacer may include one or more types selected from a group consisting of a ball spacer and a column spacer.

According to a fourth aspect of the present disclosure, at least one of the first and second transparent conductive layers may be formed by directly contacting with one of the first and second polarizing plates.

According to a fifth aspect of the present disclosure, at least one of the first and second transparent conductive layers may include one or more types selected from a group consisting of transparent conductive oxide, metal, carbonaceous matter, conductive polymers, conductive ink, and nanowires.

According to a sixth aspect of the present disclosure, at least one of the first and second polarizing plates may include one or more types selected from a group consisting of a functional coating layer, a protective layer, a retardation matching layer, a refractive index-matching layer, and an overcoat layer.

According to a seventh aspect of the present disclosure, at least one of the first and second polarizing plates may have a thickness ranging from 30 to 200µm.

According to an eighth aspect of the present disclosure, the variable transmittance optical stack may include a sealant disposed between the first stack and the second stack.

According to a ninth aspect of the present disclosure, the variable transmittance optical stack may include one or more types selected from a group consisting of a pressure sensitive adhesive/adhesive layer, an ultraviolet ray absorption layer, and an impact resistance layer.

Furthermore, the present disclosure relates to a manufacturing method for the transmittance variable optical stack.

The present disclosure relates to a smart window including the variable transmittance optical stack.

The present disclosure relates to a means of transportation including the smart window.

The present disclosure relates to a vehicle in which the smart window is applied to at least one selected from a group consisting of a front window, a rear window, a side window, a sunroof window, and an inner partition.

The present disclosure relates to a wearable device including the smart window.

The present disclosure relates to a window and a door for a building including the smart window.

### Advantageous Effects

According to the variable transmittance optical stack according to the present disclosure, when the compressive modulus of the spacer to the compressive modulus of one of the first stack and the second stack satisfies the range from 0.75 to 1.55, and when the content of the spacer to the total weight of the dispersion liquid crystal satisfies the range from 0.5 to 3.0 % by weight, an optical stack with no cracks and excellent durability can be provided.

Furthermore, according to the present disclosure, the variable transmittance optical stack can ensure smooth light transmission through a liquid crystal space and reduce defect occurrence to have excellent reliability.

Furthermore, according to the present disclosure, the variable transmittance optical stack can ensure the liquid crystal space evenly between the first stack and the second stack to provide the optical stack with excellent quality.

Furthermore, the variable transmittance optical stack according to the present disclosure can be manufactured without the process of forming a conductive layer on a substrate for the conventional optical stack and bonding the conductive layer and other members, so the manufacturing process thereof can be simplified in comparison to the convention optical stack.

### Description of Drawings

FIG. 1 is a view illustrating a stacking structure of a variable transmittance optical stack according to an embodiment of the present disclosure.
FIG. 2 is a view illustrating a stacking structure of a polarizing plate included in the variable transmittance optical stack according to the embodiment of the present disclosure.
FIG. 3 is a view illustrating a stacking structure of a smart window for a vehicle according to the embodiment of the present disclosure.
FIG. 4 is a view illustrating a stacking structure of a stacking structure of a smart window for a building window according to the embodiment of the present disclosure.
FIG. 5 is a view illustrating a stacking structure of a smart window for a building window according to another embodiment of the present disclosure.

The meanings of the reference numerals in each drawing are as follows:
100: polarizing plate
110: polarizer
120: functional coating layer
130: protective layer
140: pressure sensitive adhesive/adhesive layer
200: transparent conductive layer
300: dispersion liquid crystal
400: spacer
500: alignment film
600: pressure sensitive adhesive/adhesive layer
700: smart window glass for vehicle
800: smart window glass for building

### Best Mode

The present disclosure relates to a variable transmittance optical stack, and a manufacturing method thereof, and a smart window including the same, and the variable transmittance optical stack is configured such that a compressive modulus of a spacer to a compressive modulus of one of first and second stacks satisfies a range from 0.75 to 1.55, and the content of the spacer to the total weight of a dispersion liquid crystal satisfies a range from 0.5 to 3.0 % by weight, thereby preventing occurrence of cracks of the optical stack, and a liquid crystal space is secured between the first stack and the second stack to secure smooth light transmission and occurrence of liquid crystal defects is suppressed to improve excellent reliability.

More specifically, the present disclosure relates to the variable transmittance optical stack including: a first stack including a first polarizing plate, a first transparent conductive layer, and a first alignment film stacked in order; a second stack including a second polarizing plate, a second transparent conductive layer, and a second alignment film stacked in order; and a dispersion liquid crystal disposed between the first stack and the second stack. The dispersion liquid crystal includes a spacer, the compressive modulus of the spacer to the compressive modulus of one of the first and second stacks is 0.75 to 1.55, and the content of the spacer to the total weight of the dispersion liquid crystal ranges from 0.5 to 3.0 % by weight.

In the past, the presence or absence of defects in an optical stack was evaluated by considering the individual hardness of a spacer and a stack included in the optical stack. However, even when the presence or absence of defects is evaluated based on the hardness of the stack and the spacer, there is still a problem that some defects occur. Accordingly, the present disclosure proposes a variable transmittance optical stack. For the variable transmittance optical stack, not the hardness of a spacer and a stack in contact with the spacer, the ratio of the compressive modulus of the spacer and the stack is within a predetermined range and, specifically, the compressive modulus of the spacer to the compressive modulus of the stack satisfies the range from 0.75 to 1.55, the content of the spacer is within a predetermined range and, specifically, the content of the spacer to the total weight of a dispersion liquid crystal satisfies the range from 0.5 to 3.0 % by weight, thereby preventing occurrence of cracks, and significantly reducing the defect rate of liquid crystal such as stains, etc.

According to an embodiment of the present disclosure, the compressive modulus of one of the first and second stacks may range from 3,000 to 4,000MPa, and the compressive modulus of the spacer may range from 2,000 to 5,500MPa. When the compressive modulus of the stack and the spacer satisfies the range, it is possible to prevent occurrence of cracks of the optical stack and defects of liquid crystals, and there is an advantage in the driving stability of the optical stack.

The variable transmittance optical stack of the present disclosure is particularly suitable for technical fields where light transmittance can be changed in response to application of voltage, for example, the variable transmittance optical stack may be used for a smart window.

The smart window is an optical structure, a window controlling the amount of light or heat passing through the window by changing light transmittance in response to an electrical signal. In other words, the smart window is provided to be changed into a transparent, opaque, or translucent state by a voltage and is called variable transmittance glass, lighting control glass, or smart glass.

The smart window may be used as partitions for partitioning an internal space of vehicles and buildings or for protecting privacy, or as skylights arranged in openings of buildings. The smart window may be used as highway signs, noticeboards, scoreboards, clocks, or advertising screens and may be used to replace windows of a means of transportation, such as cars, buses, aircrafts, ships, or trains, or glass for a sunroof window of a means of transportation.

The variable transmittance optical stack of the present disclosure may also be used for the smart window of the various technical fields mentioned above, but since the conductive layer is directly formed in the polarizing plate, there is no need to include a separate or additional substance for forming the conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a means of transportation, i.e., a vehicle, or windows and doors for a building. Furthermore, the smart window may be used for not only an external light-blocking use, but also an internal space partitioning use or a privacy protection use such as an inner partition for a vehicle or a building, and may be used in wearable devices such as helmets, glasses, or watches.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may be at least one of first and second polarizing plates, "the transparent conductive layer" may be at least one of first and second transparent conductive layers, "the functional coating layer" may be at least one of first and second functional coating layers, and "the alignment film" may be at least one of first and second first alignment films.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", and "upper portion" may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" with respect to another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

Herein, "Substantially" used in this specification may be interpreted to include not only physically identical, but also within a range of error in measurement or manufacturing processes and, for example, it may be interpreted to be equal to or less than 0.1% of the range of error.

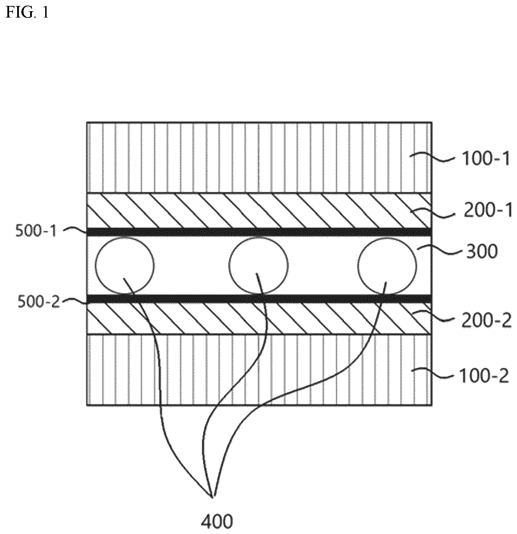

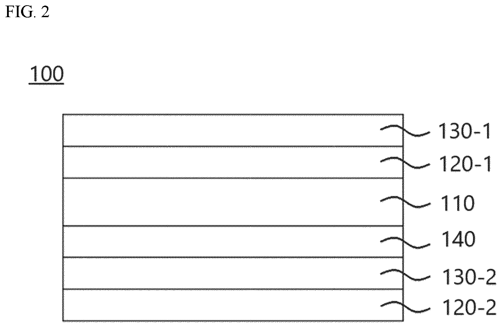

FIG. 1 is a view illustrating a stacking structure of a variable transmittance optical stack according to an embodiment of the present disclosure. FIG. 2 is a view illustrating a stacking structure of a polarizing plate included in the variable transmittance optical stack. Referring to FIG. 1, the variable transmittance optical stack of the present disclosure may include a first polarizing plate 100-1, a second polarizing plate 100-2, a first transparent conductive layer 200-1, a second transparent conductive layer 200-2, a dispersion liquid crystal 300, a liquid crystal layer including a spacer 400, and a first alignment film 500-1, and a second alignment film 500-2.

Referring to FIG. 2, the polarizing plate 100 may include a polarizer 110 located at the center, and include one or more types selected from a group consisting of a functional coating layer 120, a protective layer 130, and a pressure sensitive adhesive/adhesive layer 140 at each surface of the polarizer, and the polarizing plate 100 may include a retardation matching layer (not illustrated), a refractive index-matching layer (not illustrated), etc.

The polarizer 110 may use polarizers currently developed or to be developed, and may use, for example, a stretched polarizer or a coated polarizer.

According to the embodiment, the stretched polarizer may include a stretched polyvinyl alcohol (PVA)-based resin. The PVA-based resin may be PVA-based resin obtained by saponifying polyvinyl acetate resin. As the polyvinyl acetate-based resin, in addition to polyvinyl acetate that is homopolymer of vinyl acetate, vinyl acetate and a copolymer with other monomers that can be copolymerized with vinyl acetate. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin includes a denatured resin, and for example, may be polyvinyl formal or polyvinyl acetal denatured into aldehyde.

According to the embodiment, the coated polarizer may be formed of a composition for liquid crystal coating, and, at this point, the composition for liquid crystal coating may contain reactive liquid crystal compound, and dichroic dye, etc.

The reactive liquid crystal compound may mean a compound, for example, containing a mesogen frame, etc., and containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may be a compound having two or more polymerizable functional groups.

The dichroic dye is a substance contained in the composition for liquid crystal coating to impart the polarization characteristic, and has a property in which absorbance in a direction of long axis of molecule and absorbance in a direction of short axis. The dichroic dyes may adopt dichroic dyes currently developed or to be developed, and may contain one or more types of dyes selected from a group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, etc. may be used. Furthermore, the composition for liquid crystal coating may contain leveling agents, polymerization initiators, etc. within a range that does not deteriorate the polarization characteristics of a coating film.

The functional coating layer 120 is provided to improve the hardness of the polarizing plate 100. The functional coating layer 120 is not particularly limited as long as it can improve the hardness of the polarizing plate, for example, may include a hard coating layer, a low refractive index layer, etc.

The hard coating layer may be a hard coating layer currently developed or to be developed later. According to the embodiment of the present disclosure, the hard coating layer may be formed from a hard coating composition including acrylic compound or epoxy compound, inorganic microparticle, photoinitiator, etc. The acrylic compound may include monomer or oligomer including (meth) acrylate-group, and the term used in the specification, "(meth)acryl-" is used to refer to "methacryl-", "acryl-" or both. The acrylic compound may include monomer or oligomer including (meth) acrylate-group, and the term used in the specification, "(meth)acryl-" is used to refer to "methacryl-", "acryl-" or both. As non-restricted examples of the acrylic compound, there may be neopentylglycoldiacrylate, 1,6-hexanediol (meth) acrylate, polypropyleneglycoldi (meth) acrylate, triethyleneglycoldi (meth) acrylate, dipropyleneglycoldi (meth) acrylate, polyethyleneglycoldi (meth) acrylate, polypropyleneglycoldi (meth) acrylate, trimethylolpropanetri (meth) acrylate, trimethylolethanetri (meth) acrylate, 1,2,4-cyclohexanetetra (meth) acrylate, pentaglycerolthri (meth) acrylate, pentaerythritoltetra (meth) acrylate, pentaerythritoltri (meth) acrylate, dipentaerythritoltri (meth) acrylate, dipentaerythritolpenta (meth) acrylate, dipentaerythritoltetra (meth) acrylate, dipentaerythritolhexa (meth) acrylate, tripentaerythritoltri (meth) acrylate, tripentaerythritolhexatri (meth) acrylate, bis (2-hydroxyethyl)isocyanuratedi (meth) acrylate, hydroxyethyl (meth) acrylate, hydroxypropyl (meth) acrylate, hydroxybutyl (meth) acrylate, isooctyl (meth) acrylate, iso-dexil (meth) acrylate, stearyl (meth) acrylate, tetrahydrofurfuryl (meth) acrylate, phenoxyethyl (meth) acrylate, isoboneol (meth) acrylate, etc. The solvents may be used alone or combination of two or more types. The acrylic compound may contain an epoxy (meth) acrylate compound and/or a urethane (meth) acrylate compound. Furthermore, the epoxy compound may contain a monomer with at least one epoxy group in a molecule or an oligomer. The epoxy group may be an alicyclic epoxy group. The carbon number of an alicyclic ring included in the epoxy group may be between 3 and 7, and for example, may be alicyclic epoxy group containing a cyclohexane ring (cyclohexylepoxy). The alicyclic ring may have a substituent. For example, the alicyclic ring may include an alkyl substituent having 1 to 20 carbon atoms. When the carbon number of the alkyl substituent exceeds 20, it may be disadvantageous in terms of curing speed. The alkyl substituent may include a straight-chain type or a branched type, and in the case of the branched type, the carbon number may be 10 or more.

According to the embodiment of the present disclosure, for a manufacturing method of the hard coating film, the hard coating composition includes inorganic microparticles. According to the embodiment of the present disclosure, the inorganic microparticle may use an inorganic microparticle, which has a nanoscale particle size, and for example, may use a nanoparticle with a particle size of 100nm or less, preferably between 10 and 100nm, more preferably between 10 and 50nm. Furthermore, for example, the inorganic microparticle may use silica microparticle, aluminum oxide particle, titanium oxide particle, zinc oxide particle, or the like.

As the inorganic microparticle is contained, the hardness of the hard coating layer can be further improved. According to the embodiment of the present disclosure, the inorganic microparticle may be contained in an amount of 10 and 60 parts by weight based on the total weight of the hard coating composition, and preferably, 20 and 50 parts by weight. As the inorganic microparticles are included as the above-described range, it is possible to achieve the effect of improving hardness of the hard coating layer by adding the inorganic microparticles without deteriorating the physical properties of the hard coating composition.

According to the embodiment of the present disclosure, for the manufacturing method of the hard coating film, the hard coating composition may contain photoinitiator. According to an embodiment of the present disclosure, the optical initiator may be 1-hydroxy-cyclohexyl-phenylketone, 2-hydroxy-2-methyl-1-phenyl-1-propanone, 2-hydroxy-1-[4-(2-hydroxyethoxy)phenyl]-2-methyl-1-propanone, methylbenzoylformate, α,α-dimethoxy-α-phenylacetophenone, 2-benzoyl-2-(dimethylamino)-1-[4-(4-morpholineyl)phenyl]-1-butanone, 2-methyl-1-[4-(methylthio)phenyl]-2-(4-morpholineyl)-1-propanonediphenyl(2,4,6-trimethylbenzoyl)-phosphineoxide or bis(2,4,6-trimethylbenzoyl)-phenylphosphineoxide, etc., but is not limited thereto. Furthermore, currently available products may include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, etc. The optical initiator may be used alone or as two different types are mixed.

According to the embodiment of the present disclosure, the optical initiator may be contained in an amount of 0.5 and 10 parts by weight based on 100 parts by weight of the hard coating composition, and particularly, 1 and 5 parts by weight. When the optical initiator is within the above range, sufficient cross-linking photopolymerization can be achieved without deteriorating physical properties of the hard coating layer.

Meanwhile, for the manufacturing method of the hard coating film of the present disclosure, in addition to the above-described components, the hard coating composition may include additives commonly used in the technical field to which the present disclosure belongs, such as a surfactant, a yellowing inhibitor, a leveling agent, an antifouling agent, etc. Furthermore, the content may be variously adjusted within a range that does not deteriorate the physical properties of the hard coating composition according to the present disclosure, and is not particularly limited.

The low refractive index layer may be provided to also improve the hardness of the polarizing plate within a range that does not impair the objectives of the present disclosure. The low refractive index layer, for example, may include one or more low refractive index agents selected from a group consisting of SiO₂, Al₂O₃, MgF₂, CaF, cryloite, etc., and in some embodiments, may include a compound, or resin used in the hard coating layer. The hard coating layer and the low refractive index layer may be each used alone, and in some embodiments, may be used as a multiple-layered structure.

As shown in FIG. 2, the functional coating layer 120 may be formed by directly contacting with one surface of the polarizer 110 but is not limited thereto. For example, when the polarizing plate includes the retardation matching layer or the refractive index-matching layer, the functional coating layer may be formed on one surface of the retardation matching layer or the refractive index-matching layer, so that the functional coating layer, the retardation matching layer or the refractive index-matching layer, and the polarizer may be stacked in order.

The functional coating layer 120 is preferably formed at the side of the liquid crystal layer including the dispersion liquid crystal 300 of the polarizer 110, i.e., at the inside part of the polarizer 110. For example, the functional coating layer 120 may be formed of the first protective layer 130-1, a first functional coating layer 120-1, the polarizer 110, a second protective layer 130-2, and a second functional coating layer 120-2 that are stacked in order. In this case, the functional coating layer imparts hardness enough to form a member such as the transparent conductive layer at the polarizing plate, so there is the advantage of minimizing cracks or scratches occurring in the manufacturing or processing of the optical stack.

Each of the first functional coating layer 120-1 and the second functional coating layer 120-2 has Vickers hardness of 18 to 41. The first functional coating layer 120-1 and the second functional coating layer 120-2 may have identical hardness but are not limited thereto, and it is fine for the first functional coating layer 120-1 and the second functional coating layer 120-2 to have different hardness.

The Vickers hardness may be measured using a Vickers tip of a nano indenter (HM500, Helmut Fischer Company). When the Vickers hardness of the functional coating layer satisfies the above range, the optical stack has excellent abrasion resistance and improved bending resistance and durability and, more specifically, it is possible to efficiently restrict defects such as cracks occurring in the conductive layer due to pressure application by spacers and chemical reactions of liquid crystals, alignment films, etc. in a bonding process of the first stack (upper stack) and the second stack (lower stack).

According to one or a plurality of embodiments, the thickness of the first functional coating layer 120-1 and the thickness of the second functional coating layer 120-2 may range from 1 to 30µm, more preferably, from 1 to 20µm. The thickness may be a thickness after drying. When the thickness of the first functional coating layer 120-1 and the thickness of the second functional coating layer 120-2 satisfy the above range, the hardness thereof may be excellent, thinness is possible, and the bending resistance or durability may be improved.

The protective layer 130 is provided to preserve the polarization characteristic of the polarizer from a post-processing and external environment and may be implemented into a form such as a protective film, etc.

The protective layer may be formed by directly contacting with one or opposite surfaces of the polarizer, but is not limited thereto. For example, the protective layer may be used as a double-layer structure in which one or more protective layers are successively stacked and may be formed in direct contact with other members such as a retardation matching layer.

According to one or a plurality of embodiments, the protective layer 130 may contain one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

Furthermore, the protective layer 130 may include an ultraviolet absorber at the outermost surface thereof in order to prevent functional deterioration of the optical stack. The ultraviolet absorber is not particularly limited as long as it is to prevent deterioration of the optical stack due to UV rays. For example, the ultraviolet ray absorption layer may use salicylic acid-based ultraviolet absorber (phenyl salicylate, p-tert-butylsalicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylenebis(2-(2H-benzo[d][1,2,3]triazole-2-yl)-4-(2,4,4-trimethylpentane-2-yl)phenol), 6,6'-methylenebis(2-(2H-benzo[d][1,2,3]triazole-2-yl)-4-(2-hydroxyethyl)phenol), etc.

To secure even adhesive force between substrates, the polarizing plate 100 may include the pressure sensitive adhesive/adhesive layer 140. The pressure sensitive adhesive/adhesive layer may be formed using an adhesive or a pressure sensitive adhesive. Preferably, the adhesive may be a photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiators may absorb light energy to generate radicals or cations to initiate photopolymerization, and a proper kind may be selected and used depending on photopolymerization resin.

The pressure sensitive adhesive is not particularly limited as long as it has pressure sensitive adhesion and viscoelasticity. In an aspect of ease of acquisition, preferably, the pressure sensitive adhesive may include acrylic-based pressure sensitive adhesive, for example, may be (meth) acrylate copolymers, crosslinkers, solvents, and the like. The crosslinkers may adopt crosslinkers developed before or later and, for example, polyisocyanate compounds, epoxy resins, melamine resins, urea resins, dialdehydes, methylol polymers, etc., and may preferably include polyisocyanate compounds. The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

According to the embodiment, the adhesive layer may be formed on one surface or both surfaces of the polarizer in a laminate method. The adhesive layer of the polarizing plate may have a thickness of 0.01µm to 50µm to secure sufficient adhesion and minimize the thickness of the optical stack and, preferably, may have a thickness of 0.05µm to 20µm and, more preferably, may have a thickness of 0.1µm to 10µm.

The transparent conductive layer 200 is provided to drive the liquid crystal layer and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2. Conventionally, a lighting control optical stack used to manufacture a smart window, etc. is manufactured by forming a conductive layer for driving a liquid crystal on a first surface of a substrate and bonding a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve the transmittance in the light transmissive mode and the flexuosity while reducing the entire thickness of the stack. According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of each polarizing plate 100, and then directly contacting with the surface of each polarizing plate to which the pre-processing is performed. The pre-processing is not limited to the corona processing or the plasma processing, and may adopt a pre-processing currently developed or to be developed without harming the purpose of the present disclosure. According to another embodiment, in order to improve the adhesion between the transparent conductive layer 200 and the polarizing plate 100, the transparent conductive layer 200 may be formed by directly contacting with each polarizing plate 100 with the highly adhesive layer (not illustrated) located therebetween, the highly adhesive layer being provided on one surface of the polarizing plate 100. The transparent conductive layer 200 is preferably have the transmittance with respect to visible light of 50% or more, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed may be used. Furthermore, the conductive layer may be formed by combining these matters in a structure of two or more layers. For example, the conductive layer includes a double layered structure of a metal layer and a metal layer and a transparent conductive oxide layer, and may reduce the reflectance of incident light and increase the transmittance. When the metal layer with a high reflectance is used alone, the visibility of the display may be deteriorated, but as the transparent conductive oxide layer is stacked, the reflectance may be reduced and the transmittance may be improved.

Specifically, according to one or multiple embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), molybdenum (Mo), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), palladium (Pd), neodymium (Nd), alloy containing at least one of them, etc., and for example, may include argentum - palladium - cuprum (APC) alloy or cuprum - calcium (CuCa) alloy. The carbonaceous matter may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining these matters in a structure of two or more layers. For example, in order to reduce the reflectance of incident light and increase the transmittance, the transparent conductive layer 200 may be formed in a structure of two layers including a metal layer and a transparent conductive oxide. The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as in-mold labeling (IML) injection method and chemical vapor deposition (CVD), physical vapor deposition (PVD), plasma enhanced chemical vapor deposition (PECVD) , etc., and a plating process such as a dry method and a wet method.

The dispersion liquid crystal 300 is contained in the liquid crystal layer which adjusts transmittance of light incident in one or a plurality of directions according to electric fields to change a driving mode of the optical stack. The dispersion liquid crystal 300 contains the spacer 400. For example, the dispersion liquid crystal 300 may be located in a liquid crystal space formed by a sealant (not shown) and the spacer 400, which are provided between the first stack and the second stack. The dispersion liquid crystal 300 may be the same with liquid crystal, and is driven in response to electric fields and is not particularly limited as long as it can control transmittance of light, and may be a dispersion liquid crystal currently developed or to be developed. For example, the description of reactive liquid crystal compound of the above-mentioned coated polarizer may be equally applied thereto. The liquid crystal driving method of the liquid crystal layer is not particularly limited, for example, may be operated in the twisted nematic 9-(TN) mode. However, in addition to the TN mode, the liquid crystal driving method may include a super twisted nematic (STN) mode, a vertical alignment (VA) mode, etc.

The sealant (not illustrated) may be located between the first stack and the second stack in an inactivate region. The sealant may serve to couple the first stack and the second stack to each other and may secure space with the spacer between the first stack and the second stack for the liquid crystal layer to be provided. The sealant is not particularly limited as long as it can couple the stacks to each other and secure space for the liquid crystal layer, and may be a sealant currently developed or to be developed later. For example, the sealant may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers. The base resins of the sealant may be, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may be compounds having one acryl group, and the multifunctional acrylate may be compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators. The sealant may be provided in a method commonly used in the art and, for example, may be formed by drawing a sealant at an outer portion of the liquid crystal layer (i.e., inactivate region) with a dispenser having a nozzle.

The spacer 400 may maintain a liquid crystal cell gap of the liquid crystal layer constant. The spacer 160 may include at least one selected from a group consisting of a ball spacer and a column spacer. Specifically, it is preferable that the spacer 160 may be a ball spacer in terms of fairness. The spacer 400 may be contained in the dispersion liquid crystal, include one or more spacers, and is not particularly limited as long as it has a height suitable for supporting the liquid crystal layer.

According to the embodiment, the spacer 400 may be contained in an amount of 0.5 to 3.0 % by weight based on the total weight of the dispersion liquid crystal. The content of the spacer meets the above range, there is an advantage in the user's visibility and the improvement of the transmittance in the light transmissive mode. Furthermore, there is an advantage that cracks occurring in the optical stack and liquidcrystal defects due to stains can be significantly reduced.

The alignment film 500 is not particularly limited as long as it can provide orientation to a dispersion liquid crystal. Preferably, the alignment film 500 may include photoaligned polymers or photocurable polymers. For example, the alignment film 500 may be manufactured by applying and curing an alignment film coating composition including photoaligned polymers or photocurable polymers, photopolymerization initiators, and solvent.

The photoaligned polymers or photocurable polymers are not particularly limited and may use cinnamate series polymers, polyimide series polymers, etc. For example, photoaligned polymers or photocurable polymers may be poly(vinyl cinnamate)(PVCi), poly(siloxane cinnamate)(PSCN), poly(ω(4-chalconyloxy)alkoxyphenylmaleimide, 6-FDA-HAB-Cl, etc., and may be polymers currently developed or to be developed which is capable of expressing orientation.

The alignment film 500 may include a depression part formed by the spacer 400.

According to the embodiment, the polarizing plate 100 may include other configuration to assist or strengthen the characteristics of the optical stack in addition to the above-mentioned components. For example, the polarizing plate 100 may include the retardation matching layer, the refractive index-matching layer, etc. to improve optical characteristics.

The retardation matching layer may be provided to complement optical properties of the optical stack, and may be implemented in a retardation film, and a retardation film currently developed or to be developed may be used therefor. For example, a quarter-wave plate (1/4 wave plate) or a half-wave plate (1/2 wave plate) may be used to delay a phase difference of light, and may be used alone or in combination.

The retardation matching layer may be formed by directly contacting with one surface of the polarizer, but is not limited thereto. For example, the retardation matching layer may be formed by directly contacting with one surface of the protective layer and be formed by directly contacting with one surface of the refractive index-matching layer.

The retardation matching layer may be a polymer stretched film or a liquid crystal polymerized film, formed by stretching a polymer film that can impart optical anisotropy by stretching in an appropriate manner.

According to the embodiment, the polymer stretched film may use a polymer layer including: polyolefin such as polyethylene (PE), polypropylene (PP), etc.; cyclo olefin polymer (COP) such as polynorbornene, etc.; polyester such as polyvinyl chloride (PVC), polyacrylonitrile (PAN), polysulfone (PSU), acryl resin, polycarbonate (PC), polyethylene terephthalate (PET), etc.; cellulose ester polymer such as polyacrylate, polyvinyl alcohol (PVA), triacetyl cellulose (TAC), etc.; and/or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylene chloride, and then is solidified in a cast dry manner, and accordingly the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The description of the reactive liquid crystal compound of the coated polarizer described above may be equally applied to the reactive liquid crystal compound.

According to one or a plurality of embodiments, when the retardation matching layer is a polymer stretched film, a thickness thereof may be between 10 and 100 µm, and when the retardation matching layer is a liquid crystal polymerized film, a thickness thereof may be between 0.1 and 5µm.

The refractive index-matching layer (not illustrated) is provided to compensate for the difference in the refractive index of the optical stack due to the transparent conductive layer 200, and the refractive index-matching layer may serve to improve the visible characteristic by reducing the difference of the refractive index. Furthermore, the refractive index-matching layer may be provided to correct a color based on the transparent conductive layer 200 to be described below. Meanwhile, when the transparent conductive layer has a pattern, the refractive index-matching layer may correct the transmittance difference between a region with the pattern and a non-pattern region without the pattern.

Specifically, the transparent conductive layer 200 is stacked close to other members having a refractive index different therefrom (e.g., polarizer, etc.), and due to the difference of the refractive index between the transparent conductive layer and another layer close thereto, the difference of optical transmittance may be caused. Specifically, when the pattern is formed on the transparent conductive layer, there may be a problem in that the pattern region and the non-pattern region are visually distinguished from each other. Therefore, the refractive index-matching layer is included to compensate for refractive index, thereby reducing the difference in the optical transmittance of the optical stack. Specifically, when the pattern is formed on the transparent conductive layer, the pattern region and the non-pattern region should be provided so as not to be visually distinguished.

According to the embodiment, the refractive index of the refractive index-matching layer may be appropriately selected according to a material of another adjacent member, and may be preferably between 1.4 and 2.6, more preferably, may be between 1.4 and 2.4. In this case, it is possible to prevent optical loss due to a sharp refractive index difference between another member such as the polarizer and the transparent conductive layer 200.

The refractive index-matching layer is not particularly limited as long as it can prevent the sharply refractive difference between other members such as the polarizer, etc. and the transparent conductive layer. The refractive index-matching layer may use a compound used in the formation of refractive index-matching layers currently developed or to be developed. For example, the refractive index-matching layer 150 may be formed from refractive index-matching layer formation composition including polymerizable isocyanate compound.

According to one or multiple embodiments, the polarizing plate 100 may include other components to assist or strengthen the characteristics of the polarizing plate in addition to the above-mentioned components. For example, the polarizing plate 100 may include an overcoat layer, etc. to further improve the mechanical durability.

According to one or a plurality of embodiments, the polarizing plate 100 may have a thickness of 30 to 200 µm, and preferably, a thickness of 30 to 170 µm, and more particularly, a thickness of 50 to 150 µm. In this case, while the polarizing plate 100 maintains the optical characteristic, the optical stack having a thin thickness can be manufactured.

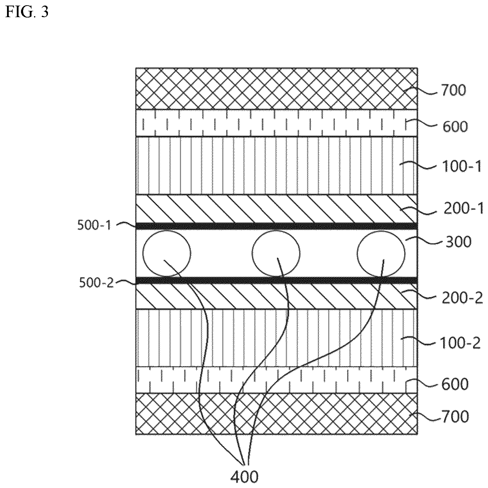

The variable transmittance optical stack of the present disclosure may include other members without harming the objectives of the present disclosure. For example, the variable transmittance optical stack may include the pressure sensitive adhesive/adhesive layer 600 (referring to FIGS. 3 to 5), or may include an ultraviolet ray absorption layer, a hard coating layer, etc.

The pressure sensitive adhesive/adhesive layer 600 may be formed using an adhesive or an adhesive, have appropriate adhesion to prevent peeling, bubbles, etc. from occurring when handling the optical stack, preferably have transparency and thermal stability, and include viscoelasticity applicable to the smart window.

The adhesive and the pressure sensitive adhesive may directly have the above descriptions for the pressure sensitive adhesive/adhesive layer 140, and the description thereof will be omitted.

The thickness of the pressure sensitive adhesive/adhesive layer 600 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to the embodiment, to secure enough pressure sensitive adhesion/adhesion and minimize the thickness of the optical stack, the pressure sensitive adhesive/adhesive layer has a thickness, in case of an adhesive layer, ranging from 0.1 to 500µm, preferably from 0.5 450µm, and more preferably, from 1 to 400µm, and in case of an pressure sensitive adhesive layer, ranging from 2 to 30µm, preferably, from 3 to 20µm, and more preferably, from 5 to 10µm. According to the embodiment, the pressure sensitive adhesive/adhesive layer 600 may be formed on one surface of both surfaces of the polarizing plate by a laminate or vacuum coupling method.

The ultraviolet ray absorption layer is not particularly limited as long as it can prevent deterioration of the optical stack due to ultraviolet rays, and the description for the ultraviolet absorber which is described in the protective layer 130 of the polarizing plate 100 may be equally applied thereto, so description will be omitted.

The impact resistance layer is located indoors. The impact resistance layer is not particularly limited as long when an impact is applied to a front surface of the window it can reduce the effect and prevent a damage to internal substrate. Preferably, the impact resistance layer may be made of a material with a high ability of accepting strain energy, for example, thermoplastic resin with high toughness. As this resin, for example, polycarbonate series resin, polyimide series resin, polyamide series region, polyamideimide series resin, polyester series resin, etc. may be used. Furthermore, the present disclosure is intended to be used in a display device, and a resin with excellent transmissive, preferably, a resin transparent optically may be used.

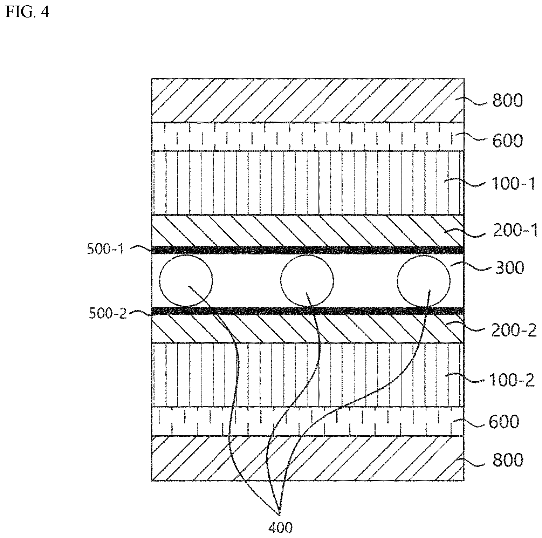

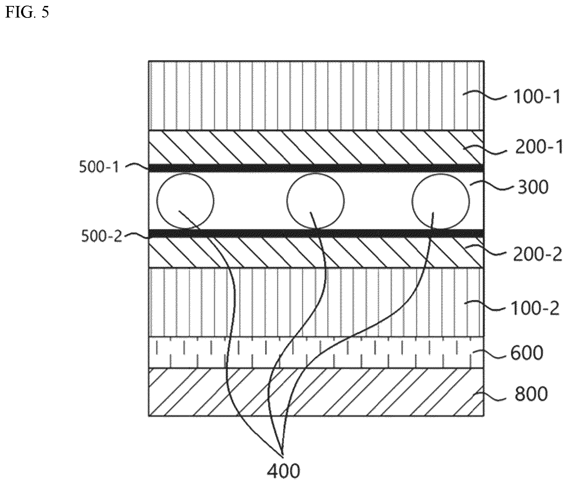

FIG. 3 is a view illustrating a stacking structure of a smart window for a vehicle using the variable transmittance optical stack according to the embodiment of the present disclosure. FIG. 4 is a view illustrating a stacking structure of a stacking structure of a smart window for a building window using the variable transmittance optical stack according to the embodiment of the present disclosure. FIG. 5 is a view illustrating a stacking structure of a smart window for a building window according to another embodiment of the present disclosure.

Referring to FIGS. 3 to 5, in addition to the variable transmittance optical stack, the present disclosure includes a smart window including the variable transmittance optical stack, a vehicle in which at least one of windows consisting of front windows, rear windows, side windows, sunroof windows, and inner partitions using the smart window, and windows for a building including the smart window. For example, the vehicle including the smart window of the present disclosure may be formed by attaching the vehicle glass 700 on both surfaces of the variable transmittance optical stack including the polarizing plate 100, the transparent conductive layer 200, the liquid crystal layer, and the pressure sensitive adhesive/adhesive layer 600 (referring to FIG. 3). for example, the window for a vehicle may be formed by placing an adhesive film and a vehicle glass on both surfaces of the optical stack, then heating the stack by using a press machine at 90°C temperature and an approximately 1bar vacuum state for 10 to 20 minutes. The adhesive film may include an EVA film, a PVB film, etc. Furthermore, the windows (glass for building windows, 800) for a building may be attached on both surfaces (referring to FIG. 4) or one surface (referring to FIG. 5) of the variable transmittance optical stack. A smart window product for a building window having the same configuration as FIG. 4 or 5 may be formed by attaching the glass for a window on both surfaces of the variable transmittance optical stack after applying a UV adhesive and then UV-curing the stack, and a smart window product for a building window having the same configuration as FIG. 4 or 5 the variable transmittance optical stack may be formed by attaching the glass for a window on one surface of the variable transmittance optical stack in the laminating method.

Otherwise, the smart window may be applied to means of transportation and wearable devices commonly used in the art.

### Mode for Invention

Hereinbelow, an embodiment of the present disclosure will be described in detail. However, the present disclosure may not be limited to embodiments disclosed below and may be implemented in various shapes, and the embodiments merely ensure that the present disclosure is complete and is provided to fully inform those skilled in the art of the scope of the present disclosure, and may be defined by the scope of the claims. "%" and "parts" are, unless otherwise specified, % by weight and parts by weight.

### Manufacturing example 1: manufacturing of polarizing plate

### (1) Swelling treatment process

A polyvinylalcohol film (material film)(manufactured by Kurarey Company, product name "Kuraray Poval Film VF-PE # 6000", average polymerization degree 2400, saponification degree 99.9 mol%) of a thickens of 60µm was returned while continuing to unroll the film from the material roll, and the film was immersed in a swelling bath added with pure water of 20°C for 30 seconds. In the swelling treatment process, stretching (vertical uniaxial stretching) between rolls was performed with adding a difference in main speed between nip rolls. Stretching magnification based on the material film was preset at 2.5 times.

### (2) Dyeing treatment process

Next, the film passing through the nip rolls was immersed in a dyeing bath at 30°C with a mass ratio of pure water/potassium iodide/iodine/boracic acid of 100/2/0.01/0.3 for 120 seconds. Also in the dyeing process, stretching between rolls (vertical uniaxial stretching) was performed while adding a difference in main speed between the nip rolls. Stretching magnification based on the film after the swelling treatment process was preset at 1.1 times.

### (3) Crosslinking treatment process

Next, the film passing through the nip rolls was immersed in a first crosslinking bath at 56°C with a mass ratio of pure water/potassium iodide/boracic acid of 100/12/4 for 70 seconds. Stretching between rolls (vertical uniaxial stretching) was performed while adding a difference in main speed between a nip roll and another nip roll provided between the first crosslinking bath and a second crosslinking bath. Stretching magnification based on the film after the dyeing treatment process was preset at 1.9 times.

### (4) Complementary color treatment process

Next, the film after the crosslinking treatment process was immersed in the second crosslinking bath at 40°C with a mass ratio of potassium iodide/boracic acid/pure water of 9/2.9/100 for 10 seconds.

### (5) Cleaning treatment process

Next, the film after the second crosslinking treatment process was immersed in a cleaning bath added with pure water at 14°C for 5 seconds, and cleaned the film with a cleaning amount of 5m3/h and a cleaning temperature of 14°C.

### (6) Drying treatment process

Next, the polarizer film was produced by heating-drying the film at 80°C for 190 seconds by passing the film after the cleaning treatment process through a dry passage. A moisture rate after drying was 13.6%, and a thickness of the obtained polarizer film was about 21µm.

### (7) Bonding treatment process

Next, as the adhesive, a water-based adhesive was prepared by including 5 parts by weight of polyvinylalcohol-based resin to 100 parts by weight of water. Thereafter, the protective film was stacked on both surfaces of the polarizer film by using the prepared UV adhesive. The upper polarizing plate and the lower polarizing plate were produced by performing UV exposure to the obtained stack and curing the adhesive. Furthermore, a thickness of the adhesive layer to the obtained polarizing plate was about 2µm.

### Manufacturing example 2: manufacturing of compositions for forming hard coating layer

The compositions for forming the hard coating layer were prepared by mixing dendrimer compounds (Miwon Specialty Chemical Company, SP-1106) 16.2g, inorganic nanoparticles (10 to 20nm, silica particles: 50 weight%, solvent: methylethylketone (MEK)) 14.4g, polyfunctional(meth)acrylate compounds 1.8g including an ethylene glycol group, photoinitiators (1-hydroxycyclohexylphenylketone) 0.7g, and methylethylketone 2.9g.

### Manufacturing example 3: manufacturing of hard coating layer

The compositions for forming the hard coating layer prepared in the manufacturing example 2 was Bar-coated on one surface of each of the upper polarizing plate and the lower polarizing plate manufactured in the manufacturing example 1 by adjusting and curing a Mayer Bar type and a solid content after calculating a hard coating thickness, and then being dried at 80°C for 5 minutes, cured with a light intensity of 500mJ/cm² in a high pressure mercury lamp, thereby manufacturing the upper polarizing plate and the lower polarizing plate each with the hard coating layer formed on one surface thereof. The Vickers hardness of the hard coating layer after the drying is 40 and the thickness thereof ranges from about 8 to 12µm.

### Manufacturing example 4: manufacturing of transparent conductive layer

The upper polarizing plate and the lower polarizing plate manufactured in the manufacturing example 3 were inserted, and 450W DC power was applied to operate a sputter gun. Next, plasma was induced to an ITO (10wt% Sn doped In2O3) target to form a transparent conductive film (90nm) on a hard coating layer of each of the upper polarizing plate and the lower polarizing plate. The formed transparent conductive film was ion-treated by operating an ion gun with 50W DC power. Herein, the transparent conductive film was manufactured by maintaining the pressure at 3mTorr at room temperature and supplying argon gas and oxygen gas at 30sccm and 1sccm respectively. At this point, the thickness of ITO was measured by a FT-SEM, and a ITO sheet resistance (Ω/□) was measured by a four-point probe.

### Manufacturing example 5: manufacturing of alignment film

An alignment solution was coated on an ITO surface of the upper polarizing plate and the lower polarizing plate manufactured in the manufacturing example 4 and dried (80°C/2 minutes). Thereafter, UV was incident on the dried alignment solution to manufacture the alignment film. Therefore, the upper polarizing plate stack (i.e., the first stack) and the lower polarizing plate stack (i.e., the second stack) were manufactured.

### Manufacturing example 6: manufacturing of optical stack b-1

A PEDOT electrode layer (DAEHA MANTECH Co., Ltd.) was formed on the hard coating layer of the upper polarizing plate and the hard coating layer of the lower polarizing plate. Except that ITO is formed on the PEDOT electrode layer, according to the manufacturing examples 1 to 5, the upper polarizing plate stack and the lower polarizing plate stack were manufactured such that the upper polarizing plate/the hard coating layer/PEDOT/ITO/the alignment film were stacked in order and the lower polarizing plate/the hard coating layer/PEDOT/ITO/the alignment film were stacked in order, respectively. Thereafter, a mixed solvent was produced by mixing the spacer based on IPA 100ml. The mixed solvent produced above was inserted into the spacer spreader (SDSS-KHU02, Shindo Company), and sprayed to the lower polarizing plate stack under a condition of 110°C and then dried for 20 minutes to form the spacer on the alignment film of the lower polarizing plate stack. Thereafter, a sealant (UVF-006, 70,000 mPa·s, SEKISUI Company) was applied on the outer circumferential surface of the lower polarizing plate stack by using the sealant dispenser (SHOTmini 200Ωx, MUSASHI Company) according to a product size. Thereafter, while the transmission shafts of the upper polarizing plate and the lower polarizing plate were arranged at 0° or 90° in parallel to each other, the dispersion liquid crystal was injected on the alignment film of the upper polarizing plate stack in the one drop filling (ODF) process method. Thereafter, the upper polarizing plate stack and the lower polarizing plate stack were attached to each other at a pressure of 3Kg/cm2, and UV curing (500mJ/cm2) was performed along a sealant line to manufacture the optical stack b-1 for the smart window.

### Manufacturing example 7: manufacturing of optical stack b-2

According to the manufacturing examples 1 to 5, the upper polarizing plate stack and the lower polarizing plate stack were manufactured such that the upper polarizing plate/hard coating layer/ITO/the alignment film were stacked in order and the polarizing plate/the hard coating layer/ITO/the alignment film were stacked in order, respectively. A mixed solvent was produced by mixing the spacer based on IPA 100ml. Thereafter, the mixed solvent produced above was inserted into the spacer spreader (SDSS-KHU02, Shindo Company), and sprayed to the lower polarizing plate stack under a condition of 110°C and then dried for 20 minutes to form the spacer on the alignment film of the lower polarizing plate stack. Thereafter, a sealant (UVF-006, 70,000 mPa·s, SEKISUI Company) was applied on the outer circumferential surface of the lower polarizing plate stack by using the sealant dispenser (SHOTmini 200Ωx, MUSASHI Company) according to a product size. Thereafter, while the transmission shafts of the upper polarizing plate and the lower polarizing plate were arranged at 0° or 90° in parallel to each other, the dispersion liquid crystal was injected on the alignment film of the upper polarizing plate stack in the one drop filling (ODF) process method. Thereafter, the upper polarizing plate stack and the lower polarizing plate stack were attached to each other at a pressure of 3Kg/cm2, and UV curing (500mJ/cm2) was performed along a sealant line to manufacture the optical stack b-2 for the smart window.

### Manufacturing example 8: manufacturing of optical stack b-3

According to the manufacturing examples 1, 4, and 5, the upper polarizing plate stack and the lower polarizing plate stack were manufactured such that the upper polarizing plate/ITO/the alignment film were stacked in order and the lower polarizing plate/ITO/the alignment film were stacked in order, respectively. First, a mixed solvent was produced by mixing the spacer based on IPA 100ml. Thereafter, the mixed solvent produced above was inserted into the spacer spreader (SDSS-KHU02, Shindo Company), and sprayed to the lower polarizing plate stack under a condition of 110°C and then dried for 20 minutes to form the spacer on the alignment film of the lower polarizing plate stack. Thereafter, a sealant (UVF-006, 70,000 mPa·s, SEKISUI Company) was applied on the outer circumferential surface of the lower polarizing plate stack by using the sealant dispenser (SHOTmini 200Ωx, MUSASHI Company) according to a product size. Thereafter, while the transmission shafts of the upper polarizing plate and the lower polarizing plate were arranged at 0° or 90° in parallel to each other, the dispersion liquid crystal was injected on the alignment film of the upper polarizing plate stack in the one drop filling (ODF) process method. Thereafter, the upper polarizing plate stack and the lower polarizing plate stack were attached to each other at a pressure of 3Kg/cm2, and UV curing (500mJ/cm2) was performed along a sealant line to manufacture the optical stack b-3 for the smart window.

### Examples and comparative examples

The optical stacks of examples 1 to 8 and comparative examples 1 to 5 were manufactured according to a type of spacer, content, and a type of optical stack indicated in Tables 1 and 2.

**[Table 1]**

| Division | Example 1 | Example 2 | Example 3 | Example 4 | Example 5 | Example 6 | Example 7 | Example 8 |
|---|---|---|---|---|---|---|---|---|
| Optical stack | b-1 | b-2 | b-2 | b-3 | b-3 | b-2 | b-3 | b-2 |
| Compressive modulus (Mpa) of upper and lower polarizing plate stack | 3,345 | 3,960 | 3,960 | 3,263 | 3,263 | 3,960 | 3,263 | 3,960 |
| Spacer | a-1 | a-2 | a-3 | a-3 | a-4 | a-3 | a-3 | a-3 |
| Compressive modulus (Mpa) of Spacer | 2,600 | 3,800 | 4,600 | 4,600 | 5,000 | 4,600 | 4,600 | 4,600 |
| Compressive modulus ratio | 0.78 | 0.96 | 1.16 | 1.41 | 1.53 | 1.16 | 1.41 | 1.16 |
| Spacer weight ratio (%) | 1.0 | 1.0 | 1.0 | 1.0 | 1.0 | 0.50 | 2 | 3 |
| Crack evaluation | ○ | ○ | ○ | ○ | ○ | ○ | ○ | ○ |
| Substrate contact evaluation | ○ | ○ | ○ | ○ | ○ | ○ | ○ | ○ |

**[Table 2]**

| Division | Comparative example 1 | Comparative example 2 | Comparative example 3 | Comparative example 4 | Comparative example 5 |
|---|---|---|---|---|---|
| Optical stack | b-2 | b-3 | b-2 | b-2 | b-2 |
| Compressive modulus (Mpa) of upper and lower polarizing plate stack | 3,960 | 3,263 | 3,960 | 3,960 | 3,960 |
| Spacer | a-1 | a-5 | a-6 | a-3 | a-3 |
| Compressive modulus (Mpa) of Spacer | 2,600 | 5,300 | 43,700 | 4,600 | 4,600 |
| Compressive modulus ratio | 0.66 | 1.62 | 11.04 | 1.16 | 1.16 |
| Spacer weight ratio (%) | 1.0 | 1.0 | 1.0 | 0.10 | 4 |
| Crack evaluation | ○ | X | X | ○ | X |
| Substrate contact evaluation | X | ○ | ○ | X | ○ |

-a-1: EZ3P-020 (SEKISUI Co.)
-a-2: SP-205 (SEKISUI Co.)
-a-3: EX-005 (SEKISUI Co.)
-a-4: EXH-005 (SEKISUI Co.)
-a-5: KBN-505 (SEKISUI Co.)
-a-6: SI (SEKISUI Co.)
-b-1: optical stack according to manufacturing example 6
-b-2: optical stack according to manufacturing example 7
-b-3: optical stack according to manufacturing example 8

### Experimental examples

### (1) Compressive modulus ratio

The compressive modulus of each of the spacers a-1 to a-6 was obtained by the testing method of JIS K7208 for compressive properties of plastics, and values thereof were calculated from 10%K-3µm particle using a nanoindenter.

Furthermore, the compressive modulus of each of the upper and lower polarizing plate stacks was measured by using a Vickers tip of the nanoindenter (HM500, Helmut Fischer Company). At this point, the hardness of the substrate was measured under the maximum load of 100mN and at a load speed from 0mN to 100mN for 12 seconds, and maintained for 5 seconds, and then testing proceeded under a condition from 100mN to 0mN for 12 seconds of Unload speed

Thereafter, the ratio of the compressive modulus of the spacer to the compressive modulus of the upper (and/or lower) polarizing plate stack was calculated and the result is shown in Tables 1 and 2.

### (2) Crack evaluation

Whether cracks occur on an optical stack surface was checked by using a mandrel of 10mm from the cylindrical mandrel bending tester COAD.711 with an optical microscope (Olympus Corporation, MX61). Specifically, a section of the substrate in contact with the spacer was checked under a 10x magnification using an optical microscope. Based on the evaluation criteria below, the results are shown in Tables 1 and 2.

### <Evaluation criteria>

∘: cracks do not occur
X: cracks occur

### (3) Substrate contact evaluation

Same as the above crack evaluation, whether the upper and lower polarizing plate stacks of the bent portion are brought into contact with each other was checked using a mandrel of 10mm from the cylindrical mandrel bending tester COAD.711 with the optical microscope (Olympus Corporation, MX61). Based on the evaluation criteria below, the results are shown in Tables 1 and 2.

### <Evaluation criteria>

∘: optical transmission is identified
X: black stain is visible

Referring to Table 1, for the optical stacks of the examples 1 to 8 in which the compressive modulus of the spacer to the compressive modulus of the upper and lower polarizing plate stacks is 0.75 to 1.55 and the content of the spacer to the total weight of the dispersion liquid crystal ranges from 0.5 to 3.0 % by weight, as the result of the flexure evaluation, no cracks occurred in a substrate of the optical stack, specifically, the substrate in contact with the spacer, and the upper polarizing plate stack and the lower polarizing plate stack were not in contact with each other at the bent portion, so light transmission is excellent.

Meanwhile, referring to Table 2, even when the content of the spacer to the total weight of the dispersion liquid crystal satisfies the range from 0.5 to 3.0 % by weight, for the optical stacks of the comparative examples 1 to 3 in which the compressive modulus of the spacer to the compressive modulus of the upper and lower polarizing plate stacks does not satisfy the range from 0.75 to 1.55, as the result of the flexure evaluation, cracks occurred on the substrate of the optical stack, specifically, the substrate in contact with the spacer (comparative examples 2 and 3), or the upper and lower polarizing plate stacks of the bent portion were brought into contact with each other so black stains were visible in the corresponding area (comparative example 1).

Furthermore, referring to Table 2, even when the compressive modulus of the spacer to the compressive modulus of the upper and lower polarizing plate stacks satisfies the range from 0.75 to 1.55, for the optical stacks of the comparative examples 4 and 5 in which the content of the spacer to the total weight of the dispersion liquid crystal does not satisfy the range from 0.5 to 3.0 % by weight, as the result of the flexure evaluation, cracks occurred on a substrate of the optical stack, specifically, the substrate in contact with the spacer (comparative example 5), and the upper polarizing plate stack and the lower polarizing plate stack of the bent portion were brought into contact with each other, so black stains were visible in the corresponding area (comparative example 4).

Therefore, for the optical stack of the present disclosure in which the compressive modulus of the spacer to the compressive modulus of the upper and lower polarizing plate stacks satisfies the range from 0.75 to 1.55, and the content of the spacer to the total weight of the dispersion liquid crystal satisfies the range from 0.5 to 3.0 % by weight, the flexuosity thereof is excellent, and the liquid crystal space can be easily secured, so light transmission is also excellent.

### [Industrial Application]

According to the variable transmittance optical stack according to the present disclosure, when the compressive modulus of the spacer to the compressive modulus of one of the first stack and the second stack satisfies the range from 0.75 to 1.55, and when the content of the spacer to the total weight of the dispersion liquid crystal satisfies the range from 0.5 to 3.0 % by weight, the optical stack with no cracks and excellent durability can be provided.

## Claims

1. A variable transmittance optical stack comprising:
a first stack comprising a first polarizing plate, a first transparent conductive layer, and a first alignment film stacked in order;
a second stack comprising a second polarizing plate, a second transparent conductive layer, and a second alignment film stacked in order; and
a dispersion liquid crystal disposed between the first stack and the second stack,
wherein the dispersion liquid crystal comprises a spacer,
a compressive modulus of the spacer to a compressive modulus of at least one of a group consisting of the first stack and the second stack is 0.75 to 1.55, and
the spacer is included in an amount of 0.5 to 3.0 % by weight based on the total weight of the dispersion liquid crystal.

2. The variable transmittance optical stack of claim 1, wherein a compressive modulus of one selected from a group consisting of the first stack and the second stack ranges from 3,000 to 4,000Mpa.

3. The variable transmittance optical stack of claim 1, wherein a compressive modulus of the spacer ranges from 2,000 to 5,500Mpa.

4. The variable transmittance optical stack of claim 1, wherein the spacer comprises one or more types selected from a group consisting of a ball spacer and a column spacer.

5. The variable transmittance optical stack of claim 1, wherein at least one of the first and second transparent conductive layers is formed by directly contacting with one of the first and second polarizing plates.

6. The variable transmittance optical stack of claim 1, wherein at least one of the first and second transparent conductive layers comprises one or more types selected from a group consisting of transparent conductive oxide, metal, carbonaceous matter, conductive polymers, conductive ink, and nanowires.

7. The variable transmittance optical stack of claim 1, wherein at least one of the first and second polarizing plates comprises one or more types selected from a group consisting of a functional coating layer, a protective layer, a retardation matching layer, a refractive index-matching layer, and an overcoat layer.

8. The variable transmittance optical stack of claim 1, wherein at least one of the first and second polarizing plates has a thickness ranging from 30 to 200µm.

9. The variable transmittance optical stack of claim 1, further comprising:
a sealant disposed between the first stack and the second stack.

10. The variable transmittance optical stack of claim 1, wherein the variable transmittance optical stack further comprises one or more types selected from a group consisting of a pressure sensitive adhesive/adhesive layer, an ultraviolet ray absorption layer, and an impact resistance layer.

11. A manufacturing method of the variable transmittance optical stack of any one of claims 1 to 10.

12. A smart window comprising the variable transmittance optical stack of any one of claims 1 to 10.

13. A means of transport comprising the smart window of claim 12.

14. A vehicle in which the smart window of claim 12 is applied to at least one selected from a group consisting of a front window, a rear window, a side window, a sunroof window, and an inner partition.

15. A wearable device comprising the smart window of claim 12.

16. Windows for a building comprising the smart window of claim 12.
